(19)
Europäisches Patentamt
European Patent Office
Office européen des brevets

(11) **EP 2 578 392 B1**

(12) **EUROPEAN PATENT SPECIFICATION**

(45) Date of publication and mention of the grant of the patent:
**24.07.2019 Bulletin 2019/30**

(21) Application number: **11786927.1**

(22) Date of filing: **26.05.2011**

(51) Int Cl.:
**B32B 27/08** $^{(2006.01)}$     **B32B 27/00** $^{(2006.01)}$

(86) International application number:
**PCT/KR2011/003883**

(87) International publication number:
**WO 2011/149295 (01.12.2011 Gazette 2011/48)**

(54) **MELT-PROCESSED MOULDED RESIN ARTICLE**

SCHMELZVERARBEITETER HARZFORMARTIKEL

ARTICLE EN RÉSINE MOULÉ FABRIQUÉ À L'ÉTAT FONDU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2011 KR 20110050133**
               **20.08.2010 KR 20100081085**
               **20.08.2010 KR 20100081084**
               **28.05.2010 KR 20100050640**
               **28.05.2010 KR 20100050639**

(43) Date of publication of application:
**10.04.2013 Bulletin 2013/15**

(73) Proprietor: **LG Chem, Ltd.**
**Seoul 07336 (KR)**

(72) Inventors:
- **YOO, Houng Sik**
  **Seoul 143-831 (KR)**
- **KIM, Hak Shin**
  **Daejeon 305-738 (KR)**
- **RYU, Jin Young**
  **Daejeon 302-120 (KR)**
- **SHIN, Chong Kyu**
  **Daejeon 305-358 (KR)**

- **HONG, Young Jun**
  **Yuseong-gu, Daejon, 305-380 (KR)**
- **KIM, Jeong Min**
  **Yuseong-gu, Daejon, 305-380 (KR)**
- **CHOI, Eun Joo**
  **Daejeon 305-509 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**US-A1- 2003 198 769     US-B1- 6 339 121**

- **HUXI LI ET AL. JOURNAL OF POLYMER SCIENCE: POLYMER PHYSICS vol. 37, 1999, pages 3368 - 3384**
- **HONGGUO LI ET AL. POLYMER vol. 38, no. 15, 1997, pages 3921 - 3925**
- **H. RETSOS ET AL. MACROMOLECULES vol. 34, 2001, pages 5295 - 5305**
- **WON-KI LEE ET AL. POLYMER TESTING vol. 17, 1998, pages 167 - 177**

**Description**

TECHNICAL FIELD

The present invention relates to a melting-processed resin article, and more particularly, to a melting-processed resin article which may realize excellent mechanical and surface characteristics. Further, since coating or plating is not required for manufacturing the resin article, a manufacturing time and/or manufacturing cost can be reduced, and productivity can be increased.

BACKGROUND

Resins are used for various applications such as a part of an automobile, a helmet, a part of an electric device, a part of a spinning machine, a toy or a pipe due to their excellent processability and properties such as tensile strength, modulus of elasticity, heat resistance and impact resistance.

Particularly, resins for home interior accessories, parts of automobiles and toys are required to be environment-friendly and have excellent scratch resistance because they are in direct contact with the human body. However, Resin are generally decomposed by oxygen in the air, ozone and light and easily changed in color when exposed to an external environment over a certain period of time. Thus, the resins become very weak in weather resistance and strength, and are easily breakable. For this reason, it is common to use a method of compensating for shortcomings of resins and improving a surface characteristic by applying an additional coating or plating process. However, such a coating or plating process can degrade efficiency and economic feasibility of a manufacturing process of resins or generate toxic materials during the process or disposal of a resin product.

Accordingly, various methods have been suggested to improve characteristics such as scratch resistance, heat resistance and whether resistance of a plastic resin without using the coating or plating process. For example, a method of adding an inorganic particle to resins has been suggested to improve physical properties such as wear resistance and hardness of resins. However, the method may deteriorate the processability of a resin and impact strength and brilliance characteristics. While a method of further adding a resin having excellent scratch resistance or heat resistance to improve a surface characteristic of a plastic resin has also been suggested, according to this method, an additional process such as a curing process after injection of a product is needed, and the physical properties such as whether resistance, heat resistance and scratch resistance may not be improved to the extent required for the product.

For these reasons, there is a demand for a method of increasing efficiency and economic feasibility of a process and improving mechanical and surface characteristic of an article without using a process of coating or plating a plastic resin.

US2003/198769 A1 discloses an article comprising: a) a first layer comprising a blend of two or more fluoropolymers, which may be perfluorinated, and b) a second layer bonded to the first layer, the second layer comprising a partially-fluorinated thermoplastic polymer, a perfluorinated thermoplastic polymer, or a combination thereof and a bonding interface between said first layer and said second layer consists essentially of a first material having the composition of said first layer and a second material having the composition of said second layer.

Journal of Polymer Science: Polymer Physics, Vol. 37, 1999, 3368-3384, discloses a melted blend in which an interface layer C is formed between polymers A and B immiscible with each other.

Polymer, Vol. 38, No. 15, 1997, 3921-3925 discloses thickness characteristics of an interface layer and a resin layer consisting of immiscible polymer blend PP/aPA, melt viscosity of the polymer resin, and PS-PMMA used a immiscible blend.

Macromolecules, Vol. 34, 2001, 5295-5305, discloses immiscible PS/polyisoprene blend and discloses that, by virtue of the interfacial characteristics of the blend, the interfacial tension is adjusted or an interaction parameter between resin layer are analyzed.

SUMMARY OF THE INVENTION

The present invention provides a melting-processed resin article may having improved mechanical and surface characteristics. Further, since coating or plating is not required for manufacturing the resin article, a manufacturing time and/or manufacturing cost can be reduced, and productivity can be increased.

In one aspect, provided is a melting-processed resin article having a layer separation structure, comprising:

a first resin layer comprising a first resin;
a second resin layer comprising a second resin formed on the first resin layer; and
an interface layer including the first resin and the second resin and formed between the first resin layer and the second resin layer,

wherein the first resin includes at least one resin selected from the group consisting of a styrene-based resin, an acrylate-based resin and a copolymer thereof, and

wherein the second resin includes a (meth)acrylate-based resin,

wherein the (meth)acrylate-based resin includes glycidyl methacrylate, perfluorohexylethyl methacrylate or tertiary butyl methacrylate in a polymerized form,

wherein the layer separation structure is obtained by a layer separation caused by a difference in surface energy, melt viscosity or solubility parameters between the first resin and the second resin, and

wherein the second resin layer has a molecular weight distribution of 1 to 2.5.

In another aspect, a resin article includes a first resin layer; a second resin layer formed on the first resin layer. Here, component of the first resin layer is detected on a surface of the second resin layer by an infrared (IR) spectrometer.

BRIEF DESCRIPTION OF THE DRAWINGS

FIG. 1 is an illustrative schematic diagram showing a structure of a melting-processed resin article according to an example of the present invention.

FIG. 2 is a SEM image illustrating a cross-sectional view of a layer-separated article according to an example of the present invention.

FIG. 3 is a SEM image illustrating a cross-sectional view of a resin article treated with a solution capable of selectively dissolving a second resin, when viewed at a 45-degree angle from the surface.

DETAILED DESCRIPTION OF EXEMPLARY EMBODIMENTS

Hereinafter, a melting-processed resin article and a method of preparing the same will be described in detail.

According to one exemplary embodiment of the present invention, a melting-processed resin article having a layer separation structure, comprising:

a first resin layer comprising a first resin;

a second resin layer comprising a second resin formed on the first resin layer; and an interface layer including the first resin and the second resin and formed between the first resin layer and the second resin layer,

wherein the first resin includes at least one resin selected from the group consisting of a styrene-based resin, an acrylate-based resin and a copolymer thereof, and wherein the second resin includes a (meth)acrylate-based resin,

wherein the (meth)acrylate-based resin includes glycidyl methacrylate, perfluorohexylethyl methacrylate or tertiary butyl methacrylate in a polymerized form,

wherein the layer separation structure is obtained by a layer separation caused by a difference in surface energy, melt viscosity or solubility parameters between the first resin and the second resin, and

wherein the second resin layer has a molecular weight distribution of 1 to 2.5.

The inventors found that when a resin blend including specific first and second resins is used, due to different physical properties between the first and second resins, layer separation may occur, and due to the layer separation, a melting-processed resin article having a structure in which the first resin layer may be divided from the second resin layer via an interface layer without using an additional process during a melting process such as extrusion or injection, and a melting-processed resin article in which the second resin layer is exposed to an ambient air could be formed, and thus completed the present invention.

In the present invention, a blend may be one in which a first resin and a second resin are uniformly blended in one matrix, or one in which a pellet composed of a first resin and a pellet composed of a second resin are uniformly blended. The one in which the resins are uniformly blended in one matrix indicates that first and second resins are uniformly blended in one pellet, and thus are present in a type of a composition.

In the present invention, a melting process or melt processing may indicate a process of melting a resin blend at a melting temperature (Tm) of the resin blend or higher to form a melt blend and forming a desired product by using the melt blend. For example, the melting process may include injection, extrusion, fiber spinning, foaming and the like.

A melting-processed resin article used herein is a resin article having a surface which is not separately treated by coating, painting or plating after a resin blend is melting-processed.

The resin article has a novel structure which has not been known in the art. The resin article is formed in such a structure that the first resin layer is separated from the second resin layer by the interface layer and the second resin layer is exposed to the ambient air. This structure may not be formed by injecting or extruding a general resin, and thus it is difficult to realize the effects according to the structure.

It is shown that such a structural characteristic of the resin article is caused by applying a resin blend of specific first and second resins. Since the second resin has a higher hydrophobicity than the first resin due to a difference in surface energy, the layer separation may be easily performed in an extrusion or injection process, and the second resin may be easily moved to a surface in contact with the ambient air. Accordingly, a melting-processed resin article in which a first resin layer is disposed inside and a second resin layer is formed on a surface of the resin article may be provided. Since the resin article can have improved mechanical and surface characteristics, a coating or painting process to improve heat resistance or scratch resistance may be omitted, a manufacturing time and/or cost may be reduced, and productivity of a final product may be increased.

A first resin used herein refers to a resin which may be included in the first resin layer, and mainly determines physical properties of a desired resin article, and thus may be selected according to a kind of the desired resin article and process conditions used herein. In addition, a second resin included in the second resin layer shows the difference in physical properties from the first resin as described above and may provide predetermined functions to a surface of the desired resin article, and thus is not particularly limited to a kind of the functions.

A layer separation or layer-separated may indicate that one layer substantially formed of one resin is disposed or aligned on another layer substantially formed of another resin. The layer substantially formed of one resin may indicate that one type of resin is continuously present in the entire layer, without forming a sea-island structure in the layer. The sea-island structure may indicate a phase-separated resin is partially distributed in an entire resin blend. Further, the "substantially formed" may indicate that one resin is present or one resin is rich in a layer. In the layer separation, two layers may be separated, or when necessary, three or more layers may be separated.

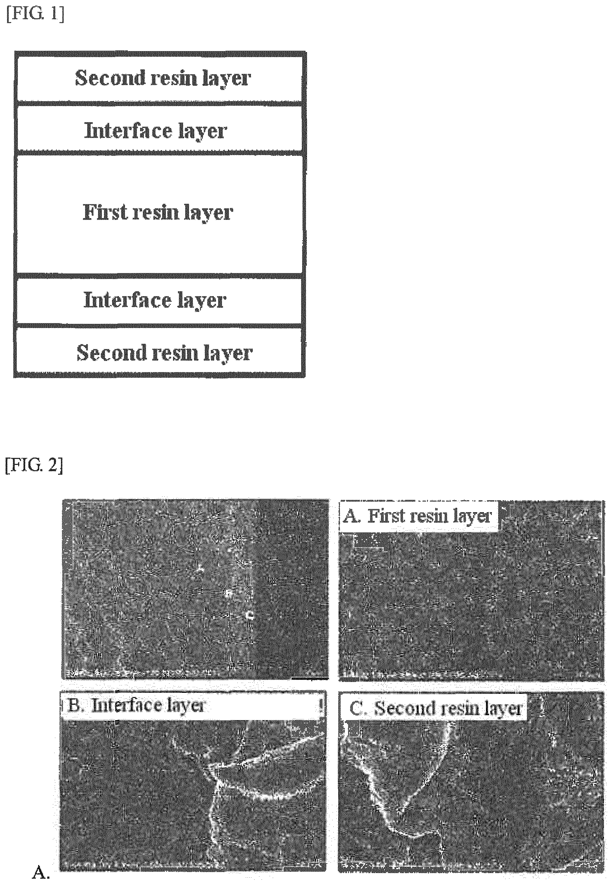

Meanwhile, the melting-processed resin article includes an interface layer including a blend of a first resin and a second resin and formed between the first resin layer and the second resin layer. As shown in FIG. 2B, the interface layer may serve as a boundary formed between the layer-separated first and second resin layers, and include the blend of the first and second resins. The blend may be present in such a manner that the first resin is physically or chemically bound to the second resin, and the first resin layer may be bound to the second resin layer by the blend.

To observe the first and second resin layers and the interface layer and measure a thickness of each layer, a sample was cut with a diamond knife using a microtoming device to obtain a smooth cross-section, and the smooth cross-section was etched uisng a solution capable of more selectively dissolving a second resin than a first resin. The etched cross-section is dissolved to different levels of depth according to contents of the first and second resins, and when the cross-section is viewed at a 45-degree angle from a surface thereof through SEM, the first resin layer, the second resin layer and the interface layer may be observed due to a shade difference and thicknesses thereof may be measured. In the present invention, as the solution more selectively dissolving the second resin, a 1,2-dichloroethane solution (10 volume%, in EtOH) is used, but is merely an example. Therefore, any solution having a higher solubility of the second resin than the first resin may be used without limitation, and the solution may vary according to the kind and composition of the second resin. The thickness of the interface layer may be 0.01 to 95%, and preferably 0.1 to 70%, of the total thickness of the second resin layer and the interface layer. When the thickness of the interface layer is 0.01 to 95% to the total thickness of the second resin layer and the interface layer, the interface adhesive strength of the first and second resin layers is excellent. Thus, first and second resin layers are not detached, and the surface characteristic caused by the second resin layer may be considerably improved. On the other hand, when the thickness of the interface layer is too smaller than the total thickness of the second resin layer and the interface layer, the adhesive strength between the first and second resin layers is decreased, and thus both layers may be detached. However, when the thickness is very thick, the improvement in a surface characteristic of the second resin layer may be insignificant.

The second resin layer may have a thickness of 0.01 to 60%, preferably, 0.1 to 40%, and more preferably 1 to 20%, of the total thickness of the resin article. As the second resin layer has a thickness in a predetermined range, predetermined functions may be provided to the surface of the resin article. Here, when the second resin layer has a very thin thickness, it may be difficult to sufficiently improve the surface characteristic of the resin article, and when the second resin layer has a very thick thickness, the mechanical property of the second resin may be reflected to the resin article, and thus the mechanical property of the first resin may be changed.

Meanwhile, according to another exemplary embodiment of the present invention, a melting-processed resin article including a first resin layer and a second resin layer formed on the first resin layer is provided. Here, the component of the first resin layer is detected from a surface of the second resin layer by an infrared (IR) spectrometer.

A structure of the article, that is, a structure in which the component of the first resin layer is detected from the surface of the second resin layer by the IR spectrometer, is novel, and has not been known in the art. Generally, in a coating process, the component of the first resin layer is difficult to detect from the surface of the second resin layer.

The surface of the second resin layer indicates a surface exposed to the ambient air, not to the first resin layer.

In addition, the component of the first resin layer indicates at least one of the components included in the first resin layer.

A structure of the melting-processed resin article, as described above, may include an interface layer including the first resin and the second resin and formed between the first resin layer and the second resin layer. Here, a thickness of the interface layer may be 0.01 to 95%, and preferably 0.1 to 75%, of a total thickness of the second resin layer and the interface layer.

In addition, the second resin layer may have a thickness of 0.01 to 60%, preferably 0.1 to 40%, and more preferably 1 to 20%, of the total resin article.

As described above, the resin article may have such a structure that the first resin layer is separated from the second resin layer by the interface layer, and the second resin layer is exposed to the ambient air. For example, the resin article may have a structure in which a first resin layer, an interface layer and a second resin layer are sequentially stacked, or a structure in which the first resin layer is disposed, and the interface layers and the second resin layer are disposed above and below the first resin layer as shown in FIG. 1. Alternatively, the resin article may have such a structure that the first resin layer formed in various three-dimensional shapes, for example, spherical, circular, polyhedral and sheet-type shapes, is sequentially surrounded by the interface and the second resin layer.

As described above, the layer separation of the resin article may be caused by a difference in physical properties between a first resin and a second resin, a molecular weight distribution (PDI) of the second resin or a weight average molecular weight (Mw) of the second resin. Here, the different physical properties are surface energy, melt viscosity or solubility parameter.

The molecular weight distribution (PDI) of the second resin is 1 to 2.5, and preferably 1 to 2.3.

When the molecular weight distribution of the second resin is greater than 2.5, the first resin is easily mixed with the second resin due to the low molecular weight of the second resin, or the mobility of the second resin in a mixture of melting state is degraded due to the high molecular weight thereof, the layer separation does not easily occur.

The weight average molecular weight (Mw) of the second resin is 30,000 to 200,000, and preferably 50,000 to 150,000.

When the weight average molecular weight is smaller than 30,000, the first resin is easily mixed with the second resin, and when the weight average molecular weight is greater than 200,000, the mobility of the second resin in a mixture of melting state is degraded and thus the layer separation does not easily occur.

The difference in surface energy between the first and second resins at 25 °C may be 0.1 to 35 mN/m, preferably 1 to 30 mN/m, and more preferably 1 to 20 mN/m. In the resin blend, after melting-process, the melt-processed the resin blend is exposed to an ambient air. At this time, the resin blend has mobility. Thus, the second resin may be positioned adjacent to the ambient air to form a surface layer of the resin article because the second resin having a smaller surface energy compared to the first resin may have a hydrophobic property, and move to contact with the ambient air. Accordingly, when the difference in surface energy is very small, the layer separation of the melt-processed resin blend does not easily occur because the second resin in a mixture of melting state is difficult to move through the polymer matrix of resin blend. Also, when the difference in surface energy is very large, the first and second resins may not be attached to each other, and thus may be detached. The difference in surface energy may be the difference in surface energy between the first resin layer and the second resin layer or between the first resin and the second resin.

In addition, a difference in a melt viscosity between the first resin and the second resin may be 0.1 to 3000 pa*s, preferably 1 to 2000 pa*s, and more preferably 1 to 1000 pa*s at a shear rate of 100 to 1000 s$^{-1}$ and a processing temperature of the resin blend. When the difference in the melt viscosity is very small, the first resin is easily mixed with the second resin and the layer separation does not easily occur. When the difference in the melt viscosity is very large, the first and second resins may not be attached to each other, and thus may be detached.

The difference in melt viscosity may be the difference in melt viscosity between the first resin layer and the second resin layer or between the first resin and the second resin.

The melt viscosity may be measured using a capillary flow meter, and indicates a shear viscosity (pa*s) at a predetermined processing temperature and shear rate (/s).

The shear rate is a shear rate applied when the resin blend of the first resin and the second resin is processed, and may be controlled according to a processing method.

The processing temperature is a temperature at which the resin blend is processed. For example, when the resin blend is subject to a process such as extrusion or injection, the processing temperature is a temperature at which the extrusion or injection is performed. The processing temperature may be controlled according to a resin subjected to extrusion or injection. For example, a processing temperature for a resin blend including a first resin composed of an ABS resin and a second resin obtained by polymerizing a methyl methacrylate-based monomer may be 210 to 240 °C.

A difference in a solubility parameter between the first resin layer and the second resin layer at 25°C may be 0.001 to 10.0 (J/cm$^3$)$^{1/2}$, preferably 0.01 to 5.0 (J/cm$^3$)$^{1/2}$, and more preferably 0.01 to 3.0 (J/cm$^3$)$^{1/2}$. A solubility parameter is an inherent characteristic of a resin showing soluble ability according to a polarity of each resin molecule, and the solubility parameter for each resin is generally known. The difference in a solubility parameter between the first resin layer and the second resin layer may indicate a difference in a solubility parameter between the first resin and the second resin. When the difference in the solubility parameter is very small, the layer separation of the resin blend does not easily occur because the first resin is easily mixed with the second resin. When the difference in the solubility parameter is very large, the first and second resins may not be attached to each other, and thus may be detached.

The resin included in the second resin layer, that is, the second resin, shows the difference in physical properties from the first resin described above, and refers to a resin capable of providing a specific function to the surface of a resin article. A kind of the functions is not particularly limited. For example, specific examples of the second resin may include an anti-wear resin, an anti-contamination resin, an anti-fingerprint resin, a colored resin, a pearl resin, a high-gloss resin, a non-gloss resin, a barrier resin or a mixture thereof.

The second resin may have either or all of a thermal curable functional group and a UV curable functional group. When a thermal curable functional group is included in the second resin, layer separation may occur and hardness may be increased due to the crosslinks formed in extrusion or injection.

A method of preparing a melting-processed resin article including forming a resin blend for a melting process including a first resin and a second resin having a difference in surface energy from the first resin at 25 °C of 0.1 to 35 mN/m; melting the resin blend to form a melt blend; and processing the melt blend is provided.

As described above, because of the difference in physical properties such as surface energy, since the second resin has a higher hydrophobicity than the first resin, the layer separation may occur when the resin blend including the first resin and the second resin is subjected to a melting process such as extrusion or injection, and thus a melting-processed resin article having the second resin layer formed on a surface thereof can be provided. Due to the excellent mechanical and surface characteristics of the melting-processed resin article, an additional coating or painting process may be omitted, and effects such as reduction of a manufacturing time and/or cost, and an increase in productivity may be achieved.

When the resin blend is used, layer separation occurs due to the difference in physcial properties between the first resin and the second resin. For this reason, it is completely different from the conventional method using a solvent having a low viscosity to easily pick an article out of a mold. In the present invention, since at least two layer-separable resins are used, surface and mechanical characteristics of the final resin article may be improved. However, according to the conventional method using the solvent having a low viscosity, the article can be simply and easily separated from a mold, and it has no effect on a physical property of the final product.

In the formation of the resin blend including the first resin and the second reisn, a method or device conventionally known to be used to blend a plastic resin, a polymer or a copolymer may be used without limitation.

A molecular weight distribution (PDI) of the second resin in the resin blend is 1 to 2.5, and preferably 1 to 2.3, and a weight average molecular weight thereof may be 30,000 to 200,000, and preferably 50,000 to 150,000.

A difference in surface energy between the first and second resins included in the resin blend at 25°C may be 0.1 to 35 mN/m, preferably 1 to 30 mN/m, and more preferably 1 to 20 mN/m. A difference in melt viscosity between the first and second resins may be 0.1 to 3000 pa*s, preferably 1 to 2000 pa*s, and more preferably 1 to 1000 pa*s at a shear rate of 100 to 1000 s$^{-1}$ and a processing temperature of the resin blend. In addition, a difference in solubility parameter between the first resin and the second resin at 25°C may be 0.001 to 10.0 $(J/cm^3)^{1/2}$, preferably 0.01 to 5.0 $(J/cm^3)^{1/2}$, and more preferably 0.01 to 3.0 $(J/cm^3)^{1/2}$.

The differences in surface energy, melt viscosity and solubility parameter between the first and second resins, and the molecular weight distribution and weight average molecular weight of the second resin have been described above in detail, and thus further detailed description will be omitted.

Accoridng to the kinds of the first and second resins used in extrusion or injection of the resin blend for a melting process, an applied temperature may be changed.

The resin blend including the first and second resins may be prepared into a pellet using a melting process. In addition, a resin article may be prepared by preparing the resin blend into a pellet by extrusion and injecting the prepared pellet. Alternatively, a resin article may be prepared by directly injecting the resin blend.

The method of preparing the melting-processed resin article may further include curing a resulting product obtained by melting-processing the resin blend, that is, a melting-processed product obtained from the resin blend. After the process such as extrusion or injection, either or both of thermal curing and ultraviolet (UV) curing may be additionally performed. When necessary, chemical treatment may be performed after the process.

The pellet prepared using the resin blend may have a structure in which a first resin is disposed in the middle thereof, and a second resin is layer-separated from the first resin and disposed on a surface thereof.

Meanwhile, the formation of the resin blend may further include preparing a second resin. As examples for the preparation of the second resin, there is as bulk polymerization, solution polymerization, suspension polymerization or emulsion polymerization.

In the suspension polymerization method, the second resin may be prepared by dispersing a monomer in a reaction medium, adding and blending an additive such as a chain transfer agent, an initiator and a dispersion stabilizer in the reaction solvent and polymerizing the blend at 40°C or higher. The monomer is a monomer of at least one resin selected from the group consisting of an anti-wear resin, an anti-contamination resin, an anti-fingerprint resin, a colored resin, a pearl resin, a high-gloss resin, a non-gloss resin and a barrier resin.

Examples of the monomer of at least one resin selected from the group consisting of the anti-wear resin, the anti-contamination resin, the anti-fingerprint resin, the colored resin, the pearl resin, the high-gloss resin, the non-gloss resin and the barrier resin may include a (meth)acrylate-based resin, an epoxy-based resin, an oxetane-based resin, an isocyanate-based resin, a silicon-based resin, a fluorine-based resin and a copolymer thereof.

The reaction medium may be any medium known to be conventionally used to prepare a synthetic resin, polymer or copolymer without limitation. An example of the reaction medium may be distilled water.

The chain transfer agent which can be added to the reaction solvent may be, but is not limited to, an alkyl mercaptan such as n-butyl mercaptan, n-dodecyl mercaptan, tertiary dodecyl mercaptan or isopropyl mercaptan; aryl mercaptan; a halogen compound such as ketone tetrachloride; or an aromatic compound such as an alpha-methylstyrene dimer or an alpha-ethylstyrene dimer.

The initiator is a polymerization initiator, which may be, but is not limited to, a peroxide such as octanoyl peroxide, decanoyl peroxide or lauryl peroxide, or an azo-based compound such as azobisisobutyronitrile or azobis-(2,4-dimethyl)-valeronitrile.

The dispersion stabilizer which can be included in the reaction medium may be, but is not limited to, an organic distribution agent such as polyvinyl alcohol, polyolefin-maleic acid or cellulose or an inorganic distribution agent such as tricalcium phosphate.

The differnet physical properties of first and second resins and the molecular weight distribution and weight average molecular weight of the second resin have already been described above in detail, and thus further description thereof will be omitted.

Furthermore, a part of an automobile, a helmet, a part of an electric device, a part of a spinning machine, a toy, or a pipe including the melting-processed resin article may be provided.

The present invention will be described with reference to the following Examples in detail. However, the present invention is not limited to the following Examples.

**Experimental Example** 1: Measurement of Surface Energy

According to the Owens-Wendt-Rabel-Kaelble (OWRK) method, surface energies of first and second resins in the Examples and Comparative Examples were measured using a drop shape analyzer (Kruss, DSA100).

Specifically, the second resin, the first resin or a sample was dissolved in a methyl ethyl ketone solvent to have a concentration of 15 wt%, and then coated on an LCD glass by bar coating. The coated LCD glass was pre-dried in an oven at 60 °C for 2 minutes and then dried at 90°C for 1 minute.

After drying (or curing), deionized water and diiodomethane were dropped 10 times on the coated surface at 25°C to measure an average value of a contact angle, and surface energy was calculated by substituting a numerical value into the OWRK method.

**Experimental Example 2: Measurement of Melt Viscosity**

In Example and Comparative Example, melt viscosities of the first and second resins were measured using a capillary rheometer 1501 (Gottfert).

More specifically, after a capillary die was attached to a barrel, the second resin, the first resin or a sample was put into the barrel by dividing to 3 parts. A shear viscosity (pa*s) according to a shear rate of 100 to 1000 $s^{-1}$ was measured at a processing temperature of 240 °C.

**Experimental Example 3: Measurement of Solubility Parameter**

While there are some methods of measuring and calculating a solubility parameter, in the following Examples and Comparative Examples, the solubility parameter was calculated at 25°C using a known method, the Van Krevelen method [refer to Bicerano, J. Prediction of Polymer Properties, third edition, Marcel Dekker Inc., New York (2002), the disclosure of which is incorporated herein by reference in its entirety]. According to the Van Krevelen method, the solubility parameter was calculated using a group contribution theory, and defined as the following formula:

$$\delta \text{ (solubility parameter)} = \sqrt{e_{coh}} = \sqrt{\frac{E_{coh}}{V}}$$

In the formula, $E_{coh}$ is a cohesive energy, V is a molar volume, and $e_{coh}$ is a cohesive energy density. The cohesive energy ($E_{coh}$) is defined as follows:

$$E_{coh} = 10570.9 \times (^0\chi^v - ^0\chi) + 9072.8 \times (2 \times ^1\chi - ^1\chi^v) + 1018.2 \times N_{VKH}$$

In the formula, $^0X$, $^1X$, $^0X^v$ and $^1X^v$ are connectivity indices, and $N_{VKH}$ is a correlation term. Each variant was calculated with reference to the disclosed literature [Bicerano, J. Prediction of Polymer Properties, third edition, Marcel Dekker Inc., New York (2002)].

## Experimental Example 4: Observation of Feature of Cross-section

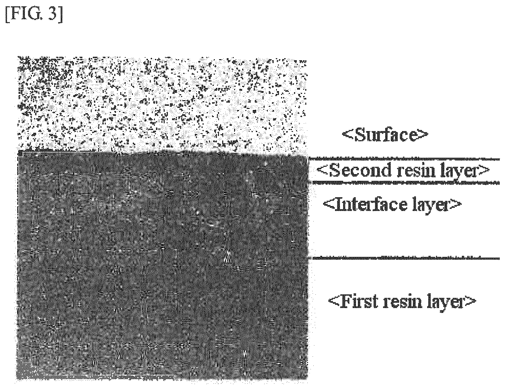

Samples prepared in Examples and Comparative Examples went through a low temperature impact test. Fracture surface of the samples were etched using THF vapor, and a layer-separated cross-section was observed uisng an SEM. The observed cross-section is shown in FIG. 2. Meanwhile, to measure thicknesses of layer-separated first and second resin layers and an interface layer, the samples of the following Examples and Comparative Examples were cut with a diamond knife at - 120 °C using a microtoming device (Leica EM FC6), thereby obtaining a smooth cross-section. The part of the sample with the microtomed smooth cross-section was dipped in a 1,2-dichloroethane solution (10 volume%, in EtOH) to etch for 10 seconds, and then washed with distilled water. The etched cross-sectional part was dissolved to different levels of depth according to the contents of the first and second resins, and could be observed using an SEM. That is, when the cross-section was viewed at a 45-degree angle from a surface, due to a shade difference, the first resin layer, the second resin layer and the interface layer could be observed, and a thickness of each layer could be measured. The feature of the cross-section observed at a 45-degree angle from the surface is shown in FIG.3.

## Experimental Example 5: Experiment for Measuring Pencil Hardness

Pencil hardnesses of the samples in Examples and Comparative Examples were measured under a constant load of 500 g using a pencil hardness tester (Chungbuk Tech). Scratches were made on a surface of the samples by standard pencils (Mitsubishi; grade 6B to 9H) with a fixed angle of 45 degrees, and therefore a change rate of the surface was observed (ASTM 3363). The values of pencil hardness are average values of the results obtained from tests performed 5 times.

## Experimental Example 6: Measurement of Molecular Weight Distribution (PDI)

Molecular weight distribution was measured using gel permeation chromatography, and conditions were as follows:

Instrument: 1200 series produced by Agilent Technologies
Column: 2 PLgel mixed Bs produced by Polymer Laboratories
Solvent: THF
Column Temperature: 40°C
Concentration of Sample: 1 mg/mL, 100 L injection
Standard: Polystyrene (Mp: 3900000, 723000, 316500, 52200, 31400, 7200, 3940 or 485)
As an analysis program, ChemStation provided by Agilent Technologies was used, and a weight average molecular weight (Mw) and a number average molecular weight (Mn) was measured using gel permeation chromatography (GPC), and the molecular weight distribution were then calculated from an equation of Mw/Mn.

## Experimental Example 7: Surface Analysis by IR Spectrometer

The experiment was performed using a UMA-600 IR microscope equipped with a Varian FTS-7000 spectrometer (Varian, USA) and a mercury cadmium telluride (MCT) detector, and detection of spectra and data processing were performed using Win-IR PRO 3.4 software (Varian, USA). Conditions of the experiment were as follows:

- Germanium (Ge) ATR crystal having refractive index of 4.0
- Spectral Resolution of Middle Infrared Spectrum obtained by Attenuated Total Reflection: 8 cm$^{-1}$ and Range of 16 Scans: 4000 cm$^{-1}$ - 600 cm$^{-1}$.
- Internal Reference Band: Carbonyl Group (C=O str., ~1725 cm$^{-1}$) of Acrylate
- Original Component of First Resin: Butadiene Compound [C=C str. (~1630 cm$^{-1}$) or =C-H out-of-plane vib. (~970 cm$^{-1}$)]

Peak intensity ratios [$I_{BD}$(C=C)/$I_A$(C=O)] and [$I_{BD}$(out-of-plane)/$I_A$(C=O)] were calculated, and the detection of spectra was performed 5 times in different regions of one sample, and therefrom an average value and a standard deviation were calculated.

## Example 1

(1) Preparation of Second Resin

1500 g of distilled water and 4 g of 2% polyvinyl alcohol aqueous solution as a dispersing agent were put into a 3-liter reactor and dissolved. Subsequently, 560 g of methyl methacrylate, 240 g of glycidyl methacrylate, 2.4 g of n-dodecyl mercaptan as a chain transfer agent and 2.4 g of azobisisobutyronitrile as an initiator were further addded thereto, and mixed while stirring at 400 rpm. The mixture was polymerized by 3-hour reaction at 60°C, and cooled to 30 °C, thereby obtaining a bead-type second resin-1. Afterward, the second resin-1 was washed three times with distilled water, dehydrated and dried in an oven.

(2) Preparation of Resin Blend and Resin Article Using the Same

After 90 parts by weight of a first resin-1 (a thermoplastic resin composed of 60 wt% methyl methacrylate, 7 wt% acrylonitrile, 10 wt% butadiene and 23 wt% styrene) was blended with 10 parts by weight of the second resin-1, the blend was extruded using a twin-screw extruder (Leistritz) at 240°C, thereby obtaining a pellet. Then, the pellet was injected using an EC100Φ30 injector (ENGEL) at 240 °C, thereby obtaining a sample 1 having a thickness of 3200 $\mu$m.

(3) Measurement of Physical Properties of Sample

As the results of measurement of the physical properties of the obtained sample 1, it was shown that a thickness of the second resin layer was 82 $\mu$m, a thickness of an interface layer was 33 $\mu$m, a difference in surface energy was 6.4 mN/m, a difference in melt viscosity was 180 pa*s, a difference in solubility parameter was 0.5 $(J/cm^3)^{1/2}$, a weight average molecular weight of the second resin measured by GPC was 100K, and a molecular weight distribution of the second resin was 2.1. In addition, a pencil hardness of the sample 1 was 2H, and layer separation occurred when observed by SEM.
The peak intensity ratio [$I_{BD}$(C=C)/$I_A$(C=O)] measured by an IR spectrometer was averagely 0.0122 with a standard deviation of 0.0004, and the peak intensity ratio [$I_{BD}$(out-of-plane)/$I_A$(C=O)] was averagely 0.411 with a standard deviation of 0.0026.

## Example 2

(1) Preparation of Second Resin

1500 g of distilled water and 4 g of 2% polyvinyl alcohol aqueous solution as a dispersing agent were put into a 3-liter reactor and dissolved. Subsequently, 760 g of methyl methacrylate, 40 g of perfluorohexylethyl methacrylate, 2.4 g of n-dodecyl mercaptan as a chain transfer agent and 2.4 g of azobisisobutyronitrile as an initiator were further added thereto, and mixed while stirring at 400 rpm. The mixture was polymerized by 3-hour reaction at 60°C, and cooled to 30 °C, thereby obtaining a bead-type second resin-2. Afterward, the second resin-2 was washed three times with distilled water, dehydrated and dried in an oven.

(2) Preparation of Resin Blend and Resin Article Using the Same

After 10 parts by weight of the second resin-2 obtained above was blended with 90 parts by weight of the first resin-1, the blend was extruded using a twin-screw extruder (Leistritz) at 240°C, thereby obtaining a pellet. Then, the pellet was injected using an EC100Φ30 injector (ENGEL) at 240°C, thereby obtaining a sample 2 having a thickness of 3200 $\mu$m.

(3) Measurement of Physical Properties of Sample

As the results of measurement of the physical properties of the obtained sample 2, it was shown that a thickness of the second resin layer was 102 $\mu$m, a thickness of an interface layer was 15 $\mu$m, a difference in surface energy was 4.2 mN/m, a difference in melt viscosity was 250 pa*s, a difference in solubility parameter was 0.2 $(J/cm^3)^{1/2}$, a weight average molecular weight of the second resin measured by GPC was 100K, and a molecular weight distribution of the second resin was 2.0. In addition, a pencil hardness of the sample 2 was 2H, and layer separation occurred.

### Example 3

(1) Preparation of Second Resin

A second resin-3 was obtained by the same method as described in Example 1, except that 560 g of methyl methacrylate, 240 g of tertiary butyl methacrylate, 2.4 g of n-dodecyl mercaptan as a chain transfer agent and 3.2 g of azobisisobutyronitrile as an initiator were put into the reactor.

(2) Preparation of Resin Blend and Resin Article Using the Same

A sample 3 having a thickness of 3200 $\mu$m was prepared by the same method as described in Example 1, except that 10 parts by weight of the second resin-3 was used instead of 10 parts by weight of the second resin-1.

(3) Measurement of Physical Properties of Sample

As the results of measurement of the physical properties of the obtained sample 3, it was shown that a thickness of the second resin layer was 79 $\mu$m, a thickness of an interface layer of 24 $\mu$m, a difference in surface energy was 1.1 mN/m, a difference in melt viscosity was 360 pa*s, a difference in solubility parameter was 0.7 $(J/cm^3)^{1/2}$, a weight average molecular weight of the second resin measured by GPC was 80K, and a molecular weight distribution of the second resin was 1.9. In addition, a pencil hardness of the sample 3 was 2H, and layer separation occurred.

### Example 4

(1) Preparation of Second Resin

The second resin-1 of Example 1 was used.

(2) Preparation of Resin Blend and Resin Article Using the Same

A sample 4 having a thickness of 3200 $\mu$m was prepared by the same method as described in Example 1, except that 90 parts by weight of a first resin-2 (a thermoplastic resin composed of 21 wt% acrylonitrile, 15 wt% butadiene and 64wt% styrene) was used instead of 90 parts by weight of the first resin-1.

(3) Measurement of Physical Properties of Sample

As the results of measurement of the physical properties of the obtained sample 4, it was shown that a thickness of the second resin layer was 46 $\mu$m, a thickness of an interface layer was 23 $\mu$m, a difference in surface energy was 6.1 mN/m, a difference in melt viscosity was 120 pa*s, a difference in solubility parameter was 0.7 $(J/cm^3)^{1/2}$, a weight average molecular weight of the second resin measured by GPC was 100K, and a molecular weight distribution of the second resin was 2.1. In addition, a pencil hardness of the sample 4 was HB, and layer separation occurred.

### Example 5

(1) Preparation of Second Resin

A second resin-4 was prepared by the same method as described in Example 1, except that 592 g of methyl methacrylate, 160 g of phenyl methacrylate, 48 g of methacrylic acid, 2.4 g of n-dodecyl mercaptan as a chain transfer agent and 2.4 g of azobisisobutyronitrile as an initiator were put into the reactor.

(2) Preparation of Resin Blend and Resin Article Using the Same

A sample 5 having a thickness of 3200 $\mu$m was prepared by the same method as described in Example 1, except that 10 parts by weight of a second resin-4 was used instead of 10 parts by weight of the second resin-1.

(3) Measurement of Physical Properties of Sample

As the results of measurement of the physical properties of the obtained sample 5, it was shown that a thickness of the second resin layer was 13 $\mu$m, a thickness of an interface layer was 36 $\mu$m, a difference in surface energy was 2.0 mN/m, a difference in melt viscosity was 350 pa*s, a difference in solubility parameter was 0.6 $(J/cm^3)^{1/2}$, a weight average molecular weight of the second resin measured by GPC was 100K, and a molecular weight distribution of the second resin was 2.2. In addition, a pencil hardness of the sample 3 was 1.5H, and layer separation occurred.

**Comparative Example 1**

Comparative Example 1 was prepared with only the first resin-1 of Example 1. Particularly, 100 parts by weight of the first resin-1 was extruded using a twin-screw extruder (Leistritz) at 240°C, thereby obtaining a pellet. Then, the pellet was injected using an EC100Φ30 injector (ENGEL) at 240°C, thereby obtaining a sample 6 having a thickness of 3200 $\mu$m.

As the results of measurement of the physical properties of the obtained sample 6, it was shown that a pencil hardness of the sample 6 was F, and layer separation was not observed.

**Comparative Example 2**

100 parts by weight of the first resin-2 was extruded using a twin-screw extruder (Leistritz) at 240°C, thereby obtaining a pellet. Then, the pellet was injected using an EC100Φ30 injector (ENGEL) at 240 °C, thereby obtaining a sample 7 having a thickness of 3200 $\mu$m.

As the results of measurement of the physical properties of the obtained sample 7, it was shown that a pencil hardness of the sample 7 was 2B, and layer separation was not observed.

**Comparative Example 3**

(1) Preparation of Second Resin

1500 g of distilled water and 4 g of 2% polyvinyl alcohol aqueous solution as a dispersing agent were put into a 3-liter reactor and dissolved. Subsequently, 40 g of methyl methacrylate, 760 g of perfluorohexylethyl methacrylate, 2.4 g of n-dodecyl mercaptan as a chain transfer agent and 2.4 g of azobisisobutyronitrile as an initiator were further added thereto, and mixed while stirring at 400 rpm. The mixture was polymerized by 3-hour reaction at 60 °C, and cooled to 30 °C, thereby obtaining a bead-type second resin-5. Afterward, the second resin-5 was washed three times with distilled water, dehydrated and dried in an oven.

(2) Preparation of Resin Blend and Resin Article Using the Same

A sample 8 having a thickness of 3200 $\mu$m was prepared by the same method as described in Example 1, except that 10 parts by weight of a second resin-5 was used instead of 10 parts by weight of the second resin-1.

(3) Measurement of Physical Properties of Sample

As the results of measurement of the physical properties of the obtained sample 8, it was shown that a difference in surface energy was 37 mN/m, a difference in melt viscosity was 375 pa*s, a difference in solubility parameter was 3.5 $(J/cm^3)^{1/2}$, a weight average molecular weight of the second resin measured by GPC was 100K, and a molecular weight distribution of the second resin was 2.1. In addition, detachment between the first resin and the second resin in the sample 8 occurred, and thus a pencil hardness of the sample 8 was not measured.

**Comparative Example 4**

(1) Preparation of Second Resin

A second resin-6 was prepared by the same method as described in Example 1, except that 0.8 g of n-dodecyl mercaptan and 1.6 g of azobisisobutyronitrile were used instead of 2.4 g of n-dodecyl mercaptan and 2.4 g of azobisisobutyronitrile.

(2) Preparation of Resin Blend and Resin Article Using the Same

A sample 9 having a thickness of 3200 $\mu$m was prepared by the same method as described in Example 1, except that 10 parts by weight of a second resin-6 was used instead of 10 parts by weight of the second resin-1.

(3) Measurement of Physical Properties of Sample

As the results of measurement of the physical properties of the obtained sample 9, it was shown that a difference in surface energy was 6.3 mN/m, a difference in melt viscosity was 1090 pa*s, a difference in solubility parameter was 0.5 (J/cm$^3$)$^{1/2}$, a weight average molecular weight of the second resin measured by GPC was 205K, and a molecular weight distribution of the second resin was 3.3. In addition, a pencil hardness of the sample 9 was H, layer separation was partially observed, and the thickness of separated layer was non-uniform in parts.

## Comparative Example 5

(1) Preparation of Second Resin

A second resin-7 was prepared by the same method as described in Example 3, except that 4.8 g of n-dodecyl mercaptan and 2.4 g of azobisisobutyronitrile were used instead of 2.4 g of n-dodecyl mercaptan and 3.2 g of azobisisobutyronitrile.

(2) Preparation of Resin Blend and Resin Article Using the Same

A sample 10 having a thickness of 3200 $\mu$m was prepared by the same method as described in Example 3, except that 10 parts by weight of a second resin-7 was used instead of 10 parts by weight of the second resin-3.

(3) Measurement of Physical Properties of Sample

As the results of measurement of the physical properties of the obtained sample 10, it was shown that a difference in surface energy was 1 mN/m, a difference in melt viscosity was 610 pa*s, a difference in solubility parameter was 0.7 (J/cm$^3$)$^{1/2}$, a weight average molecular weight of the second resin was 42K, and a molecular weight distribution of the second resin was 3.2. In addition, a pencil hardness of the sample 10 was F, and layer separation was not observed.

## Comparative Example 6

(1) Preparation of Second Resin

A second resin-8 was prepared by the same method as described in Example 3, except that 0.5 g of n-dodecyl mercaptan and 1.6 g of azobisisobutyronitrile were used instead of 2.4 g of n-dodecyl mercaptan and 3.2 g of azobisisobutyronitrile.

(2) Preparation of Resin Blend and Resin Article Using the Same

A sample 11 having a thickness of 3200 $\mu$m was prepared by the same method as described in Example 3, except that 10 parts by weight of a second resin-8 was used instead of 10 parts by weight of the second resin-3.

(3) Measurement of Physical Properties of Sample

As the results of measurement of the physical properties of the obtained sample 11, it was shown that a difference in surface energy was 1 mN/m, a difference in melt viscosity was 1390 pa*s, a difference in solubility parameter was 0.7 (J/cm$^3$)$^{1/2}$, a weight average molecular weight of the second resin measured by GPC was 245K, and a molecular weight distribution of the second resin was 5.3. In addition, a pencil hardness of the sample 11 was F, and layer separation was not observed.

### Comparative Example 7

(1) Preparation of Second Resin

A second resin-9 was prepared by the same method as described in Example 3, except that 0.4 g of n-dodecyl mercaptan and 1.1 g of azobisisobutyronitrile were used instead of 2.4 g of n-dodecyl mercaptan and 3.2 g of azobisisobutyronitrile.

(2) Preparation of Resin Blend and Resin Article Using the Same

A sample 12 having a thickness of 3200 $\mu$m was prepared by the same method as described in Example 3, except that 10 parts by weight of a second resin-9 was used instead of 10 parts by weight of the second resin-3.

(3) Measurement of Physical Properties of Sample

As the results of measurement of the physical properties of the obtained sample 12, it was shown that a difference in surface energy was 1 mN/m, a difference in melt viscosity was 2200 pa*s, a difference in solubility parameter was 0.7 $(J/cm^3)^{1/2}$, a weight average molecular weight of the second resin measured by GPC was 320K, and a molecular weight distribution of the second resin was 5.2. In addition, a pencil hardness of the sample 12 was F, and layer separation was not observed.

### Comparative Example 8

A hard coating layer was formed on the sample 6 of Comparative Example 1 by forming a layer by coating a hard coating solution prepared by the inventor including a multifunctional acrylate (19 wt% DPHA, 10 wt% PETA, 5 wt% urethane acrylate EB 1290 from SK cytech, 45 wt% methyl ethyl ketone, 20 wt% isopropyl alcohol and 1 wt% IRGACURE 184 as a UV initiator from Ciba) using a Mayer bar #9 and drying the coating at 60 to 90 °C for 4 minutes to form a coating film, and curing the coating film by UV irradiation with an intensity of 3000 mJ/cm$^2$.

A pencil hardness of the hard coating layer was 3H, and average values and standard variations of peak intensity ratios $[I_{BD}(C=C) / I_A(C=O)]$ and $[I_{BD}(out\text{-}of\text{-}plane) / I_A(C=O)]$ detected by an IR spectrometer were 0, respectively.

As shown in Examples and Comparative Examples, it was confirmed that, in Examples 1 to 5 using the first resin and second resin having predetermined differences in surface energy, melt viscosity and solubility parameter, layer separation occurred, and thus a melting-processed resin article including a first resin layer, an interface layer and a second resin layer was formed.

As the second resin layer was formed on a surface of the melting-processed resin article, the melting-processed resin article had an improved surface characteristic. Specifically, it was confirmed that Examples 1 to 5 using the second resin polymerized from a methyl methacrylate-based monomer could exhibit excellent anti-scratch characteristics due to a high pencil hardness of HB or more.

On the other hand, the resin articles prepared using only the first resin (of Comparative Examples 1 and 2) did not have separated layers and had low surface pencil hardness. Accordingly, to use the resin article obtained in Comparative Examples 1 and 2 for a part of an automobile or a part of an electric device, a coating process to improve a surface characteristic was additionally required.

Meanwhile, when the difference in surface energy between the second resin layer and the first resin layer was greater than 35 mN/m (in Comparative Example 3), the first resin was not attached to the second resin and the both resins were detached from each other. Therefore, it was understood that layer separation occurred in the resin article only when the first resin and the second resin had a certain difference in surface energy (at 25°C) like Examples 1 to 5.

In addition, it was understood from Comparative Examples 4 to 7 that layer separation was observed only when the second resin had molecular weight and molecular weight distribution as described the above.

As shown in Example 1 and Comparative Example 8, it was confirmed that according to the analysis of the surface of the second resin layer by an IR spectrometer, components of the first resin layer were detected in Example 1, but were not detected in Comparative Example 8 in which the layer was hard-coated.

According to the present invention, a melting-processed resin article which can have excellent mechanical and surface characteristics without application of an additional coating process and exhibit an effect such as reduction of a manufacturing time and/or cost, and an increase in productivity can be provided.

## Claims

1. A melting-processed resin article having a layer separation structure, comprising:

   a first resin layer comprising a first resin;
   a second resin layer comprising a second resin formed on the first resin layer; and
   an interface layer including the first resin and the second resin and formed between the first resin layer and the second resin layer,
   wherein the first resin includes at least one resin selected from the group consisting of a styrene-based resin, an acrylate-based resin and a copolymer thereof, and
   wherein the second resin includes a (meth)acrylate-based resin,
   wherein the (meth)acrylate-based resin includes glycidyl methacrylate, perfluorohexylethyl methacrylate or tertiary butyl methacrylate in a polymerized form,
   wherein the layer separation structure is obtained by a layer separation caused by a difference in surface energy, melt viscosity or solubility parameters between the first resin and the second resin, and
   wherein the second resin layer has a molecular weight distribution of 1 to 2.5 measured using gel permeation chromatography under the conditions as described in the description.

2. The resin article according to claim 1, wherein the interface layer has a thickness of 0.01 to 95% based on the total thickness of the second resin layer and the interface layer.

3. The resin article according to claim 1, wherein the interface layer has a thickness of 0.1 to 75% based on the total thickness of the second resin layer and the interface layer.

4. The resin article according to claim 1, wherein the second resin layer has a thickness of 0.01 to 60% based on the total thickness of the resin article.

5. The resin article according to claim 1, wherein the first resin layer and the second resin layer has a difference in surface energy at 25°C of 0.1 to 35 mN/m.

6. The resin article according to claim 1, wherein the first resin layer and the second resin layer have a difference in melt viscosity of 0.1 to 3000 pa*s at a shear rate of 100 to 1000 $s^{-1}$ and a processing temperature of the blend of the first resin and the second resin.

7. The resin article according to claim 1, wherein the first resin layer and the second resin layer have a difference in solubility parameter at 25°C of 0.001 to 10.0 $(J/cm^3)^{1/2}$.

8. The resin article according to claim 1, wherein the second resin layer has a weight average molecular weight of 30,000 to 200,000.

9. The resin article according to claim 1, wherein the second resin layer includes at least one resin selected from the group consisting of an anti-wear resin, an anti-contamination resin, an anti-fingerprint resin, a colored resin, a pearl resin, a high-gloss resin, a non-gloss resin and a barrier resin.

## Patentansprüche

1. Schmelzverarbeiteter Harzartikel mit einer Schichttrennstruktur, umfassend:

   eine erste Harzschicht umfassend ein erstes Harz;
   eine zweite Harzschicht umfassend ein zweites Harz, die auf der ersten Harzschicht gebildet ist; und
   eine Grenzflächenschicht einschließend das erste Harz und das zweite Harz und gebildet zwischen der ersten Harzschicht und der zweiten Harzschicht,
   wobei das erste Harz wenigstens ein Harz einschließt, ausgewählt aus der Gruppe bestehend aus einem Harz auf Styrolbasis, einem Harz auf Acrylatbasis und einem Copolymer derselben, und
   wobei das zweite Harz ein Harz auf (Meth)acrylatbasis einschließt,
   wobei das Harz auf (Meth)acrylatbasis Glycidylmethacrylat, Perfluorhexylethylmethacrylat oder tertiär-Butylmethacrylat in einer polymerisierten Form einschließt,

wobei die Schichttrennstruktur durch eine Schichttrennung erhalten wird, die durch einen Unterschied in der Oberflächenenergie, Schmelzviskosität oder den Löslichkeitsparametern zwischen dem ersten Harz und dem zweiten Harz bewirkt wird, und

wobei das zweite Harz eine Molekulargewichtsverteilung von 1 bis 2,5 aufweist, gemessen unter Verwendung von Gelpermeationschromatographie unter den in der Beschreibung beschriebenen Bedingungen.

2. Harzartikel nach Anspruch 1, wobei die Grenzflächenschicht eine Dicke von 0,01 bis 95%, basierend auf der Gesamtdicke der zweiten Harzschicht und der Grenzflächenschicht, aufweist.

3. Harzartikel nach Anspruch 1, wobei die Grenzflächenschicht eine Dicke von 0,1 bis 75%, basierend auf der Gesamtdicke der zweiten Harzschicht und der Grenzflächenschicht, aufweist.

4. Harzartikel nach Anspruch 1, wobei die zweite Harzschicht eine Dicke von 0,01 bis 60%, basierend auf der Gesamtdicke des Harzartikels, aufweist.

5. Harzartikel nach Anspruch 1, wobei die erste Harzschicht und die zweite Harzschicht einen Unterschied in der Oberflächenenergie bei 25°C von 0,1 bis 35 mN/m aufweisen.

6. Harzartikel nach Anspruch 1, wobei die erste Harzschicht und die zweite Harzschicht einen Unterschied in der Schmelzviskosität von 0,1 bis 3000 pa*s bei einer Scherrate von 100 bis 1000 $s^{-1}$ und einer Verarbeitungstemperatur der Mischung des ersten Harzes und des zweiten Harzes aufweisen.

7. Harzartikel nach Anspruch 1, wobei die erste Harzschicht und die zweite Harzschicht einen Unterschied im Löslichkeitsparameter bei 25°C von 0.001 bis 10,0 $(J/cm^3)^{1/2}$ aufweisen.

8. Harzartikel nach Anspruch 1, wobei die zweite Harzschicht ein Gewichtsmittelmolekulargewicht von 30.000 bis 200.000 aufweist.

9. Harzartikel nach Anspruch 1, wobei die zweite Harzschicht wenigstens ein Harz einschließt, ausgewählt aus der Gruppe bestehend aus einem Antiabnutzungsharz, einem Antikontaminationsharz, einem Antifingerabdruckharz, einem gefärbten Harz, einem Perlharz, einem Hochglanzharz, einem Nichtglanzharz und einem Barriereharz.

**Revendications**

1. Article en résine moulé fabriqué à l'état fondu ayant une structure de séparation des couches, comprenant :

une première couche de résine comprenant une première résine ;
une deuxième couche de résine comprenant une deuxième résine formée sur la première couche de résine, et
une couche d'interface renfermant la première résine et la deuxième résine et formée entre la première couche de résine et la deuxième couche de résine,
dans lequel la première résine renferme au moins une résine sélectionnée dans le groupe constitué d'une résine à base de styrène, d'une résine à base d'acrylate et d'un copolymère de celles-ci, et
dans lequel la deuxième résine renferme une résine à base de (méth)acrylate,
dans lequel la résine à base de (méth) acrylate renferme du méthacrylate de glycidyle, du méthacrylate de perfluorohexyléthyle ou du méthacrylate de butyle tertiaire sous une forme polymérisée
dans lequel la structure de séparation des couches est obtenue par une séparation des couches causée par une différence en énergie de surface, en viscosité à l'état fondu ou en paramètres de solubilité entre la première résine et la deuxième résine, et
dans lequel la deuxième couche de résine a une distribution de poids moléculaire de 1 à 2,5 mesurée en utilisant la chromatographie par perméation de gel sous les conditions décrites dans la description.

2. Article en résine selon la revendication 1, dans lequel la couche d'interface a une épaisseur de 0,01 à 95 % par rapport à l'épaisseur totale de la deuxième couche de résine et de la couche d'interface.

3. Article en résine selon la revendication 1, dans lequel la couche d'interface a une épaisseur de 0,1 à 75 % par rapport à l'épaisseur totale de la deuxième couche de résine et de la couche d'interface.

**4.** Article en résine selon la revendication 1, dans lequel la deuxième couche de résine a une épaisseur de 0,01 à 60 % par rapport à l'épaisseur totale de l'article en résine.

**5.** Article en résine selon la revendication 1, dans lequel la première couche de résine et la deuxième couche de résine présentent une différence en énergie de surface à 25°C de 0,1 à 35 mN/m.

**6.** Article en résine selon la revendication 1, dans lequel la première couche de résine et la deuxième couche de résine présentent une différence en viscosité à l'état fondu de 0,1 à 3000 pa*s à un taux de cisaillement de 100 à 1000 $s^{-1}$ et en température de mise en oeuvre du mélange de la première résine et de la deuxième résine.

**7.** Article en résine selon la revendication 1, dans lequel la première couche de résine et la deuxième couche de résine présentent une différence en paramètre de solubilité à 25°C de 0,001 à 10,0 $(J/cm^3)^{1/2}$.

**8.** Article en résine selon la revendication 1, dans lequel la deuxième couche de résine a un poids moléculaire moyen en poids de 30.000 à 200.000.

**9.** Article en résine selon la revendication 1, dans lequel la deuxième couche de résine renferme au moins une résine sélectionnée dans le groupe constitué d'une résine résistante à l'usure, d'une résine anticontamination, d'une résine anti-empreintes, d'une résine colorée, d'une résine nacrée, d'une résine hautement polie, d'une résine non polie et d'une résine imperméable.

[FIG. 1]

| Second resin layer |
| Interface layer |
| First resin layer |
| Interface layer |
| Second resin layer |

[FIG. 2]

A. First resin layer

B. Interface layer

C. Second resin layer

A.

[FIG. 3]

<Surface>

<Second resin layer>

<Interface layer>

<First resin layer>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003198769 A1

**Non-patent literature cited in the description**

- *Journal of Polymer Science: Polymer Physics,* 1999, vol. 37, 3368-3384

- *Polymer,* 1997, vol. 38 (15), 3921-3925
- *Macromolecules,* 2001, vol. 34, 5295-5305